# EUROPEAN PATENT SPECIFICATION

(11) **EP 3 095 711 B1**
(45) Date of publication and mention of the grant of the patent: **30.01.2019**
(21) Application number: 16169417.9
(22) Date of filing: 12.05.2016
(51) Int. Cl.: B64F 5/00, C23C 24/04

(54) **METHODS FOR RESTORING AN AIRCRAFT FRAME ELEMENT**
VERFAHREN ZUR WIEDERHERSTELLUNG EINES FLUGZEUGRAHMENELEMENTS
PROCÉDÉS PERMETTANT DE RESTAURER UN ÉLÉMENT DE CHÂSSIS D'AÉRONEF

(30) Priority: 21.05.2015 US 201562164702 P
(43) Date of publication of application: 23.11.2016
(73) Proprietor: RUAG Australia Pty Ltd, Bayswater, Victoria 3153 (AU)
(72) Inventor: Matthews, Neil, Beaconsfield, Victoria 3807 (AU); Jones, Rhys, Blackburn South, Victoria 3130 (AU)
(74) Representative: Walker, Ross Thomson

(56) References cited:
- EP-A2- 2 626 166
- WO-A1-2007/137599
- WO-A1-2016/115248
- WO-A2-2013/142902
- US-A1- 2015 122 079

## Description

### FIELD OF THE INVENTION

The present invention relates to the field of aircraft repair. In particular, the invention relates to the prevention and repair and restoration of structural weaknesses in aircraft structures.

### BACKGROUND TO THE INVENTION

The fuselage and wings of many aircraft are of all-metal construction. While the sheet metal shell (or skin) carries various loads, aircraft structures are reinforced by a framework of structural elements. The cross sectional shape of the fuselage may be provided by structures such as bulkheads, station webs, and rings. The longitudinal contour of the fuselage may be provided by longerons, formers, and stringers. The shell which is fastened to the structural members carries primarily shear load and, together with the longitudinal members, the loads of tension and bending stresses. Station webs are built up assemblies located at intervals to carry concentrated loads and at points where fittings are used to attach external parts such as wings and engine mounts.

Primary bending loads on the fuselage may be absorbed by the longerons, which typically extend across several points of support. The longerons are supplemented by other longitudinal members, termed stringers. Stringers are lighter in weight and are used more extensively than longerons. The vertical structural members may include bulkheads, frames, and formers. These vertical members are often grouped at intervals to carry concentrated loads and at points where fittings are used to attach other units, such as the wings, engines, and stabilizers.

Framework elements of an aircraft wing include the stringers, ribs, stiffeners and spars. Similar elements are used also in reinforcement of the empennage of an aircraft.

Given the significant loads placed on aircraft frame elements, such elements are routinely inspected for signs of impending failure. Quite apart from fatigue related weaknesses, some frame element materials (such as 7075 aluminum alloy) are prone to stress corrosion cracking.

Clearly, any cracking or other deficiency must be attended to promptly so as to recover all structural strength and avoid the propagation of defects from the damaged area before the aircraft can be put back into service.

Prior art methods for repairing aircraft frame elements typically involve the application of a metal patch over the deficiency. A known repair mode involves covering the damaged area with a generally circular liner or patch, whose area is significantly larger than the damaged area, then fastening the liner or patch to the portion of the structure that remains sound with any appropriate means, such as rivets, bolts, welding or bonding.

With generally effective at overcoming any weakness in the frame element, a disadvantage of this solution is that the patch alters the overall design behaviour of the repaired frame element. In particular, the overall load characteristics of the element may be altered. For example, load carried by the patch is transferred to the surrounding frame element at the points at which the patch is fastened to the element. Thus, load is not evenly distributed throughout the entire structure after repair, as per design considerations. The patch attachment points transfer significant load to only a small border area about the patch, this leading to higher than normal loads in those surrounding areas. Accordingly, the frame element does not act according to design, and new areas of weakness of cracking may develop by localised stresses being placed on metal surrounding the patch. Patch repairs may locally over-stiffen the structure and result in catastrophic failure in the frame element.

A further problem is that the application of patches may actually initiate a weakness in the underlying structure. Such undetected and undetectable cracks can compromise the safety of the frame element. Drilling into frame members only weakens the structure and also exposes metal to the environment which may lead to corrosion.

It is an aspect of the present invention to overcome or alleviate a problem of the prior art by providing a method for repairing a structural weakness in an aircraft frame element without materially altering a design parameter of the element, or increasing the probability for further structural weakness or corrosion to occur. A further aspect of the present invention is to provide an alternative to prior art methods for the repair of aircraft frame elements.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention as it existed before the priority date of each claim of this application.

wo 2016/115248 A is relevant state of the art according to Article 54(3) EPC and

discloses a method of repairing or, in certain cases, strengthening a metallic substrate at a damage site by removing material from the substrate round the damage site to form a recess, and fold spraying particulate material into the recess to form a bead of deposited material

### SUMMARY OF THE INVENTION

In a first aspect, but not necessarily the broadest aspect the present invention provides a method for (i) repairing a structural weakness, or (ii) preventing or inhibiting the initiation of a structural weakness, or (iii) preventing or inhibiting the progression of a structural weakness in an aircraft frame element, the method comprising the step of bonding a plurality of particles to the element by treating both sides of the element, the bonding being effected under conditions allowing the plurality of metallic particles to form a substantially continuous layer both over and under the area of weakness, or the predicted area of weakness.

In one embodiment, at least a proportion, or substantially all, of the particles are metallic particles.

In one embodiment, the bonding does not involve melting or fusing of the particles.

In one embodiment, the bonding is achieved by a cold spray process.

In one embodiment, the cold spray process is supersonic particle deposition.

In one embodiment, the step of bonding the plurality of particles to the element is performed under conditions such that a design parameter of the element is not materially altered negatively.

In one embodiment, the depth of the substantially continuous layer is controlled during the step of bonding such that a design parameter of the element is not materially altered negatively.

In one embodiment, the design parameter is buckling resistance.

In one embodiment, the depth of the substantially continuous layer is at least about 0.05 mm.

In one embodiment, the depth of the substantially continuous layer is less than about 4 mm.

In one embodiment, the substantially continuous layer has substantially even depth across the application surface.

In one embodiment, the structural weakness is a crack.

In one embodiment, the crack is a stress corrosion crack.

In one embodiment, the frame element is a longeron, a former, a stringer, a bulkhead, a rib, or a spar.

In another aspect, the present invention provides an aircraft frame element comprising a substantially continuous metallic layer, the layer being deposited on a surface of the structure, the layer being capable of (i) repairing a structural weakness, or (ii) preventing or inhibiting the initiation of a structural weakness, or (iii) preventing or inhibiting the progression of a structural weakness in the aircraft structure, wherein the layer comprises a plurality of metallic particles; wherein both sides of the element are treated and the plurality of metallic particles form a substantially continuous layer both over and under the area of weakness, or the predicted area of weakness.

In one embodiment, at least a proportion, or substantially all, of the particles are metallic particles.

In one embodiment, the substantially continuous layer is deposited on the surface of the aircraft structure by a method as described herein.

In one embodiment, the substantially continuous layer has a depth of at least about 0.05 mm.

In one embodiment, the substantially continuous layer has a depth of less than about 4 mm.

In one embodiment, the substantially continuous layer has substantially even depth across the application surface.

In one embodiment, the structural weakness is a crack.

In one embodiment, the crack is a stress corrosion crack.

In one embodiment, a design parameter of the element is not materially altered negatively.

In one embodiment, the design parameter is buckling resistance.

In one embodiment, the frame element is a longeron, a former, a stringer, a bulkhead, a rib, or a spar.

### BRIEF DESCRIPTION OF THE DRAWINGS

Fig. 1A is a diagrammatic representation of a test specimen in plan view.
Fig. 1B is a diagrammatic representation of a test specimen having an applied SPD patch (upper drawing in plan view, lower drawing in lateral view).
Fig 2 is a graph showing the load carrying capacity of test elements having a crack repaired with an SPD patch.
Fig. 3A is a photograph showing the buckling mode of a test specimen (no crack, no SPD).
Fig. 3B is a photograph showing the buckling mode of a test specimen (with crack, repaired with SPD).
Fig. 4A is a photograph of the exterior surface of right hand wing, upper wing panel (part number 938807-102).
Fig. 4B is a photograph showing the internal arrangement of stiffeners in the wing of Fig. 4A.
Fig. 5 is a diagram showing the geometry of the test specimen with simulated SCC.
Fig. 6 is a diagram showing the Geometry of the baseline specimen (no simulated crack).
Fig. 7 Schematic diagram of SPD repair to simulated stress corrosion cracking (SCC).
Fig. 8 The buckled shapes, (A) with simulated SCC, (B) baseline specimen, (C) SPD repair to simulated SCC, SPD specimen 1.
Fig. 9 is a photograph showing the buckling mode of SCC specimen.
Fig. 10 is a photograph showing failure configuration of the SPD repair to simulated SCC specimen 1 (a view of from concave side of deformed stiffer direction).
Fig. 11 is a photograph showing failure configuration of SPD repair to simulated SCC specimen 1 (a view of from protruding side of deformed stiffer direction).
Fig. 12 is a photograph showing failure configuration of the SPD repair to simulated SCC specimen 1 (a view of from specimen above).
Fig. 13 is a photograph showing failure configuration of the SPD repair to simulated SCC specimen 2 (a view of from concave side of deformed stiffer direction).
Fig. 14 is a photograph showing failure configuration of the SPD repair to simulated SCC specimen 2 (a view of from protruding side of deformed stiffer direction).
Fig. 15 is a photograph showing failure configuration of the SPD repair to simulated SCC specimen 2 (a view of from specimen above).
Fig. 16 is a graph of axial force versus axial displacement.
Fig. 17 is computer output for Case 1; the buckling analysis, (KI = 4.42 MPa√m, KII = 11.56 MPa√m, Kill = 18.56 MPa√m and Keff = 25.4 MPa√m).
Fig. 18 is computer output for Case 2; the linear static analysis, (KI = 0.79 MPa√m, KII = 6.82 MPa√m, Kill = 2.22 MPa√m and Keff = 7.4 MPa√m.)
Fig. 19 is computer output for Case 1: von Mises stresses in the SPD directly over the SCC on either side of the rib.
Fig. 20 is computer output for von Mises stresses in the 0.1 mm thick and 0.2 mm thick SPD directly over the SCC on either side of the rib.
Fig. 21 is a photograph of a test specimen representative of a wing portion having three stiffeners. Each stiffener has a simulated crack. Load has been applied leading to buckling.
Figs. 22A and 22B are the output of a computer model of a test specimen having a single stiffener.
Fig. 23A is a photograph of a test specimen representing a stiffener. Load has been applied leading to buckling.
Fig 23B is the output of a computer model of the specimen of Fig. 7A. The similarity with Fig. 7A will be noted.
Fig 24A is the output of a computer model of a test specimen (no crack, no SPD). Load has been applied leading to buckling.
Fig 24B is the output of a computer model of a test specimen (with crack, not repaired with SPD). Load has been applied leading to buckling.
Fig 25A is the output of a computer model of a test specimen (no crack, no SPD). Load has been applied leading to buckling.
Fig 25B is the output of a computer model of a test specimen (with crack, repaired with SPD). Load has been applied leading to buckling.
Fig. 26A is the output of a computer model to further show buckling of a test specimen with no SCC and no SPD patch.
Fig. 26B is the output of a computer model to further show buckling of a test specimen with SCC and with SPD patch.

### DETAILED DESCRIPTION OF THE INVENTION

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and from different embodiments, as would be understood by those in the art.

For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the claims below and the description herein, any one of the terms "comprising", "comprised of" or "which comprises" is an open term that means including at least the elements/features that follow, but not excluding others. Thus, the term comprising, when used in the claims, should not be interpreted as being limitative to the means or elements or steps listed thereafter. For example, the scope of the expression a method comprising step A and step B should not be limited to methods consisting only of methods A and B. Any one of the terms "including" or "which includes" or "that includes" as used herein is also an open term that also means including at least the elements/features that follow the term, but not excluding others. Thus, "including" is synonymous with and means "comprising".

In a first aspect the present invention provides a method for (i) repairing a structural weakness, or (ii) preventing or inhibiting the initiation of a structural weakness, or (iii) preventing or inhibiting the progression of a structural weakness in an aircraft frame element, the method comprising the step of bonding a plurality of particles to the element by treating both sides of the element, the bonding being effected under conditions allowing the plurality of metallic particles to form a substantially continuous layer both over and under the area of weakness, or the predicted area of weakness.

Applicant has discovered that the deposition of a substantially continuous layer of particles over an area of structural weakness (or potential structural weakness) in an aircraft frame element has a positive effect on the present or future structural integrity of the element.

The present invention is a departure from prior art uses of supersonic particle deposition (SPD) techniques in aircraft repair applications. International patent application PCT/AU2013/000309 (published as WO2013/142902) discloses the use of SPD for the repair of the lap joints of the metal skin of a fuselage. In that application, which is considered as being the closest prior art and discloses the features of the preamble of independent claim 9, the SPD layer was applied as relatively deep layer over the fastener holes of a lap joint to exclude environmental contaminants from the joint. The avoidance of contaminants lessened the opportunity for corrosion to worsen any existing cracks of the lap joint. By contrast, the present invention is directed to the finding that SPD techniques are able to return an entire aircraft frame element to substantially its original state so far as a design parameter is concerned. For example, the resistance to buckling of the entire element can be returned to an original design specification.

As used herein, the term "repair" is not intended to be construed narrowly to mean that the structure must be returned precisely to its original state. It is contemplated that in some embodiments, the structure may be returned to a proportion of its original structural strength, or indeed or a multiple of its original strength.

The term "prevent" is not intended to be limited to circumstances where the initiation of a structural weakness is completely prevented. The initiation of the weakness may be delayed in time, or it may manifest as a less severe weakness at initiation.

The term "inhibit" is not intended to mean that progression of the structural weakness is completely inhibited. It may just mean that the progression is delayed, or that it progresses to an otherwise less severe weakness.

The term "structural weakness" is intended to mean any weakness in the frame element (or in any part of the frame element where the structure is multi-partite) that alters the ability of the element to remain integral upon the application of a force. In the context of the present invention a structural weakness includes a crack, a split, a bend, a deformation, a tear, or damage occasioned by exposure to an environmental element on an aircraft frame element in the course of service. It does not include any weakness deliberately inflicted on a structure, nor is the term intended to include any alteration in the geometry of a structure such as may be occasioned on a gearbox component, or an engine component, for example.

While the step of bonding may involve the melting and/or fusing of the particles (such as that involved in high velocity or low velocity oxygen fuel thermal spray coatings), preferred embodiments of the method do not involve melting or fusing of the particles. In one embodiment of the method, the step of bonding the plurality of particles is accomplished by bonding directly to the substrate (and also to each other) by the release of kinetic energy from the particles. The particles may acquire the kinetic energy by any means, but the energy is typically acquired by accelerating the particles to a high velocity toward the substrate. Upon impact with the substrate, the particles deform (typically flattening) and form a consolidated structure up to several centimetres deep.

Impact of the particles with a solid surface at sufficient velocity causes plastic deformation and bonding with the underlying material without the creation of heat affected zones which are typical of other deposition processes and which are undesirable in many structural applications. Bonding is a result of high strain rate deformation and adiabatic shear instabilities and the bond interface. Specific advantages of this technology include but are not limited to the following
a. SPD produces an excellent bond with the substrate
b. SPD can be used to create almost any required depth.
c. SPD produces coatings with very few defects Reusable for reclamation of eroded surfaces and application of wear resistant coating. (SPD enables the continuing reuse of the base material).
d. Can be applied to recover damaged geometry without adversely affecting the substrate (no distortion, heat affected zones or embrittlement).
e. The method can be used to enhance structural integrity through localized strengthening which may reduce the initiation of cracks or propagation of cracks.
f. SPD can be used to seal a joint and a riveted repair against the ingress of environmental elements thereby alleviating the environmental degradation of the structure.
g. Significant reduction in occupational health and safety risks associated with a number of current in-service applied coatings (e.g. cadmium and hexavalent-chromium-containing compounds)

Such embodiments of the method are operative at temperatures below the melting point of the particle used in the method. In some embodiments, the method is operative at a temperature of less than 90%, 80%, 70%, 60%, 50%, 40%, 30%, 20%, 10%, 9%, 8%, 7%, 6%, 5%, 4%, 3%, 2% or 1% of the melting point of the particle.

One particularly useful method for bonding particles (and particularly metallic particles) to the frame element is a cold spray method. Cold spray methods are known in the art, and are characterized by the application of particles to a substrate at temperatures below the melting point of the particles. As used herein, the term "cold spray" is intended to include any coating process utilizing a high-speed gas jet to accelerate a plurality of particles toward a substrate whereby the particles consolidate on impact. In many cases, the process is conducted at a temperature that is substantially lower than the particle melting point.

The term 'cold spray' has been used to describe this process due to the relatively low temperatures of the expanded gas stream that exits the spray nozzle. After exiting the nozzle, the particles are impacted onto a substrate, where the solid particles deform and create a bond with the substrate. As the process continues, particles continue to impact and form bonds with the previously consolidated material resulting in a uniform deposit with very little porosity and high bond strength.

Since bonding of the powder to the substrate, as well as the cohesion of the deposited material, is accomplished in the solid state at low temperatures, the characteristics of the cold sprayed material is advantageous in the context of the present invention. Because particle oxidation as well as deleterious tensile stresses that occur during thermal contraction are minimized, the cold spray process has the ability to produce materials with comparatively superior bond strength to the substrate and greater cohesive strength.

In some embodiments of the method the substantially continuous layer is formed by exposing the structure to a high velocity (typically between 300 and 1200 m/s) stream of solid-phase particles, which have been accelerated by a supersonic gas flow, typically nitrogen or helium, at a temperature that can range between about 400 and 900°C.

Cold spray processes are known by alternative names including supersonic particle Deposition (SPD); dynamic spray high velocity powder deposition, kinetic spraying, and Kinetic Energy Metallization.

In one embodiment, the cold spray process is a low pressure cold spray process comprising injecting the plurality of particles in the diverging section of the spray nozzle from a low-pressure gas supply.

In low-pressure cold spray, air or nitrogen at relatively low pressure-80-140 psi-is also preheated, up to 550°C, then forced through a DeLaval nozzle. At the diverging side of the nozzle, the heated gas is accelerated to about 600 m/s. Powder feedstock is introduced downstream in the diverging section and accelerated toward the substrate. As the applicability of cold spray technology expands to new and unique areas of application, there has been an increasing number of commercially available, ready-to-use cold spray systems introduced into the marketplace.

In high-pressure cold spray, helium or nitrogen at high pressure, up to 1,000 psi, is preheated--up to 1,000°C--and then forced through a converging-diverging DeLaval nozzle. At the nozzle, the expansion of the gas produces the conversion of enthalpy into kinetic energy, which accelerates the gas flow to supersonic regime-1,000 m/s-while reducing its temperature. The powder feedstock is introduced axially into the gas stream, prior to the nozzle throat. The accelerated solid particles impact the substrate with enough kinetic energy to induce mechanical and/or metallurgical bonding.

The skilled artisan appreciates that both high pressure and low pressure cold spray processes may be operable in the context of the present invention.

Of greater relevance than the pressure *per se* is the velocity at which the particles are propelled toward the substrate. Pressure is one parameter that will influence velocity, however other factors such as particle size and particle weight will have an effect. Typically, the process is operated such that the particles are propelled at or exceeding a minimum velocity that is sufficient to provide adhesion of particles, and/or provide an acceptable porosity in the resultant coating, and/or provide an acceptable deposition efficiency.

However, the velocity should not be so high as to damage the substrate, or result in the deflection of significant amounts of particle off the substrate or the building particulate layer. Preferred velocities for a given application vary according to the powder type. For some powders a low pressure unit will generate a sufficient velocity to achieve the required adhesion, porosity or deposition efficiency. For aluminium powder (which is a preferred species of particle in the present methods) a low pressure system may achieve the desired outcome if operated at its upper limits. However, it is more typical for a high pressure unit to be used in the present methods.

The skilled artisan is enabled to adapt a cold spray method to be operable in the context of the present methods. For example, where a particular hardness is required in the consolidated metal layer relatively simple particle impact models as applied to empirical models for flow stress and hardness may result in useful predications of the hardness resulting from a cold spray metallic powder deposition. In particular, reference is made to the modelling of Champagne et al (Modelling Simul. Mater. Sci. Eng. 18 (2010) 065011 (8pp)). These authors show that strain hardening of cold sprayed deposits is a result of the flattening of the particles as they impact and bond with the surface. Particle impact velocity is the principle controlled parameter of the cold spray process, where particle velocity and material properties determine particle flattening.

A constitutive model often used for high strain rate deformation is that of Johnson and Cook 1983 (A constitutive model and data for metals subjected to large strains, high strain rates and high temperatures. In Proceedings of the 7th International Symposium on Ballistics (Vol. 21, pp. 541-547)). This model includes strain hardening, strain rate hardening and thermal softening effects during deformation.

A number of variables may be routinely manipulated to achieve a desired outcome for a particular application. While not all variables must necessarily be considered to achieve a desired outcome, some of which may be considered include the following non-limiting parameters:
a. Substrate material
   i. Type
   ii. Condition
   iii. Surface Finish
b. Powder
   i. Material Type
   ii. Material Condition
   iii. Size
   iv. Shape
c. Application Nozzle
   i. Material Type
   ii. Nozzle Shape
d. Carrier Gas
   i. Type
e. Deposition Parameters
   i. Gas input pressure
   ii. Gas expansion temperature
   iii. Deposition flow rates
   iv. Deposition transition rates

The particles may compromise a single species of particle, or multiple species. The plurality of particles may be metallic particles, polymer particles or composite particles. For aircraft-related application the particles are typically metallic particles fabricated from any elementary or alloyed metal, including (but not limited to) aluminium, zinc, tin, copper, nickel, titanium, tantalum, cobalt, iron, niobium, molybdenum, and tungsten. Preferably the metallic particles are aluminium particles. The particles are typically utilized in the form of a commercially available powder, generally ranging in size from about 5 to about 100µm.

The choice of particle is within the ability of the skilled artisan. Generally, the particle is composed of the same material as the substrate.

In one embodiment of the method, the substantially continuous layer is substantially dense and/or substantially impervious to a liquid, including water, any polar solvent or any nonpolar solvent. An advantage of such layers is that weather is excluded from any underlying surface that would normally be prone to corrosion, this enhancing the operation life of the aircraft.

In some embodiments, the method is adapted to deposit a substantially continuous layer having a depth of at least about 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm. 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.5 mm, 6.0 mm, 6.5 mm, 7.0 mm, 7.5 mm, 8.0 mm, 8.5 mm, 9.0 mm, 9.5 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm. Preferably, the substantially continuous layer has a depth of at least about 0.05 mm. At this depth, a layer deposited by SPD may be capable of achieving one of (i) repairing a structural weakness, (ii) preventing or inhibiting the initiation of a structural weakness, (iii) preventing or inhibiting the progression of a structural weakness in an frame element and (iv) preventing the ingress of an environmental element the aims. For typical applications in aircraft, the substantially continuous layer has a depth of from about 0.2 mm to about 4 mm. Depths of at least about 0.2 mm have greater utility in structural aspects of the invention.

In some embodiments, the method is adapted to deposit a substantially continuous layer having a depth of at most about 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm. 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.5 mm, 6.0 mm, 6.5 mm, 7.0 mm, 7.5 mm, 8.0 mm, 8.5 mm, 9.0 mm, 9.5 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

It will be understood that the depth may vary according to the repair being undertaken.

The method may be conducted such that a substantially continuous layer of particles of any depth is created. The skilled artisan will be capable of assessing a minimum required depth for any given structural result required. For example, where the structural weakness is minor or the frame element is not a critical component, a lesser depth may be implemented. Conversely, a greater depth may be indicated where the element has significant damage, or where the element has minor damage but is expected to be exposed to high levels of stress during operation.

For methods whereby the frame element is to be returned to an original design parameter, the depth of the deposited layer may be an important consideration. While the prior art teaches that any minimum depth is acceptable so as to achieve a required result, in preferred embodiments of the method, the depth of the deposited layer may need to be customized for a given application so that the treated region is not overly strengthened or stiffened. Given the benefit of the present specification, suitable maximum depths may be arrived at by no more than routine experimentation to assess any alterations to the overall design behaviour of the frame element. For example, where application of a SPD patch results in an alteration to buckling mode and/or buckling load (as compared with an original, undamaged element) the depth may be reduced such that the buckling mode and/or buckling load is substantially that of the original.

Layers of between about 0.1 and about 0.5 mm are contemplated to be useful for many applications. In some embodiments of the method, the layer depth may be between about 0.2 and 0.5 mm, 0.3 to 0.5 mm, 0.4 to 0.5 mm, 0.1 to 0.2 mm, 0.1 to 0.3 mm, 0.1 to 0.4 mm, or 0.2 to 0.4 mm.

It will be understood that depth of the layer may be adjusted by building up smaller layers of particles in the course of the method. In some embodiments, the substantially continuous layer has substantially even depth across the application surface.

Apart from the depth of the layer, the size of the patch may be adjusted (either alone, or in conjunction with the depth) so as to avoid over stiffening the frame element.

According to the invention, the layer is applied to both sides. In some embodiments, the deposited layer encircles the element. Typically, however, the part is two-side and both sides are treated. The frame element may be any part of an aircraft for which carries load, but is not part of the shell.

In one embodiment of the method, the frame element is composed of a single part. In one embodiment, the frame element has two or more parts.

Layers of between about 0.1 and about 0.5 mm are contemplated to be useful for many applications. In some embodiments of the frame element, the layer depth may be between about 0.2 and 0.5 mm, 0.3 to 0.5 mm, 0.4 to 0.5 mm, 0.1 to 0.2 mm, 0.1 to 0.3 mm, 0.1 to 0.4 mm, or 0.2 to 0.4 mm.

In one embodiment of the invention the structural weakness is a crack. Preferably the crack is a stress corrosion crack (SCC). As well known to the skilled person, SCC is a crack resulting from a small crack formed in a corrosive environment. An SCC can lead to unexpected sudden failure of normally ductile metals subjected to a tensile stress, especially at elevated temperature in the case of metals.

It will be appreciated that other types of structural weaknesses may be repaired by the present invention, including damage resulting from material removal (often termed "blend outs") which the prior art has repaired using an external patch repair.

The present methods are capable of substantially restoring a design parameter of a frame element. The restoration may be partial or complete, and in some embodiments the restoration results in the frame element having a substantially identical design parameter as compared with an undamaged and unrepaired element. In other embodiments, the parameter is not identical, but within 1, 2, 3, 4, 5, 6, 7, 8, 9, 10, 11, 12, 13, 14, 15, 16, 17, 18, 19 or 20% that of the undamaged and unrepaired element.

The design parameter may apply to only part of the frame element. For example, the buckling load of a short span of a frame element. In other embodiments, the design parameter applies to the entire element, such as the buckling load of an entire stringer.

The design parameter may be buckling resistance (such as buckling load or buckling mode), failure resistance, breaking resistance, cracking resistance, compression resistance, tension resistance, torsion resistance, flexing resistance, resilience, elasticity, strength, a tensile property, a shear property, or a compressive property.
etc.

Preferably, the design parameter is buckling load or buckling resistance

In another aspect the present invention provides a frame element according to the features of independent claim 9.

In some embodiments, the substantially continuous layer has a depth of at least about 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm. 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.5 mm, 6.0 mm, 6.5 mm, 7.0 mm, 7.5 mm, 8.0 mm, 8.5 mm, 9.0 mm, 9.5 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

In some embodiments, the substantially continuous layer has a depth of at most about 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm. 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.5 mm, 6.0 mm, 6.5 mm, 7.0 mm, 7.5 mm, 8.0 mm, 8.5 mm, 9.0 mm, 9.5 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

In some embodiments, the substantially continuous layer has a substantially even depth across the application surface.

In one embodiment, the substantially continuous layer is formed by a method as described herein.

The frame element may be a longeron, a stringer, a former, a bukhead, a stationweb, a ring, a stiffener, a spar, a subfloor support, or a portion of any of the aforementioned elements.

The present invention will now be more fully described by reference to the following non-limiting examples.

### EXAMPLE 1: Validation of SPD repair in simulated stress corrosion cracks.

The ability to repair a SCC in an aircraft frame element using SPD was validated for a number of specimens.

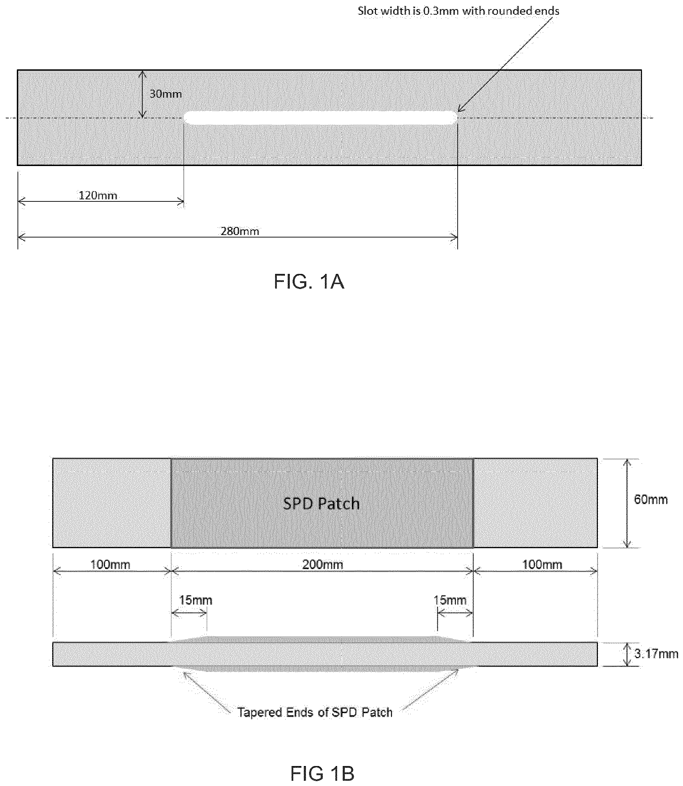

The test specimens were 7075 aluminium having a depth of 3.17 mm. A slot having a width of 0.3 mm and having rounded termini was cut into the test material to simulate a typical SCC seen in an aircraft frame element. Reference is made to Fig. 1A showing the relevant dimensions of the test element.

A 0.3 mm SPD patch was applied to both sides of the test element

The patch was deposited using a 7075 Aluminium Alloy powder with a nominal particle size of between 30 and 40 µm.

The following deposition parameters were utilized:
Elapsed Time Between Surface Preparation And Coating: 15-20mins
Main Gas Pressure (Bar): 40
P/F Vessel Pressure (Bar): 38
Temperature (°C): 400
P/F Hopper Heater: Active
Main Gas Flow (m3/hr): 92-100
P/F Gas Quantity (m3/h): 6.5
Powder Feed Rate (RPM): 2.7rpm
Release Temp (°C): 300
Preheat Temp (°C): 350
Increment (mm): -0.25mm
Traverse Rate (mm/s): 250mm/s
Stand Off (mm): 40mm (where possible)
Number Of Layers: 12 - 16 Passes per Patch
Deposition Depth: 0.3 mm
Post Treatment: None

Reference is made to Fig. 1B showing the dimensions of the applied SPD patch. It will be noted that the patch extended 20 mm past the rounded termini of the slot, and for the full width of the element (60 mm). The edges (15 mm) of the patch were tapered.

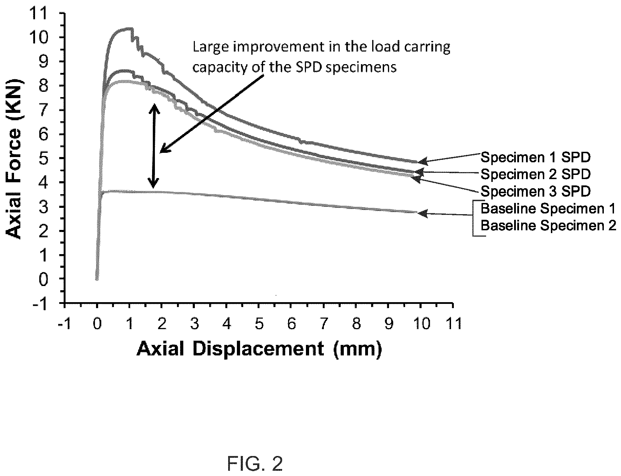

It was found that the SPD patch dramatically increased buckling load of test elements having the simulated SCC. Reference is made to Fig. 2, comparing three test elements having a SPD patch applied as shown in Fig. 1B, as compared with a baseline element (no SPD patch applied). The higher buckling load of Specimen 1 (with SPD) was caused by the deposition of a layer deeper than the target 0.3 mm.

This experiment shows that the buckling load of a frame element can be improved by the use of an SPD patch. Alteration of the patch depth can be used to modulate the buckling mode of an element. Accordingly, buckling load can be restored at least to that of the original (i.e. undamaged) element.

It can furthermore be concluded that buckling load can be restored to substantially that of the original (i.e. undamaged) element. Accordingly, the buckling load of the overall element can be restored without exceeding the buckling load of the original frame element. For any given frame element, the patch depth could be adapted so as to return the element to an original design parameter.

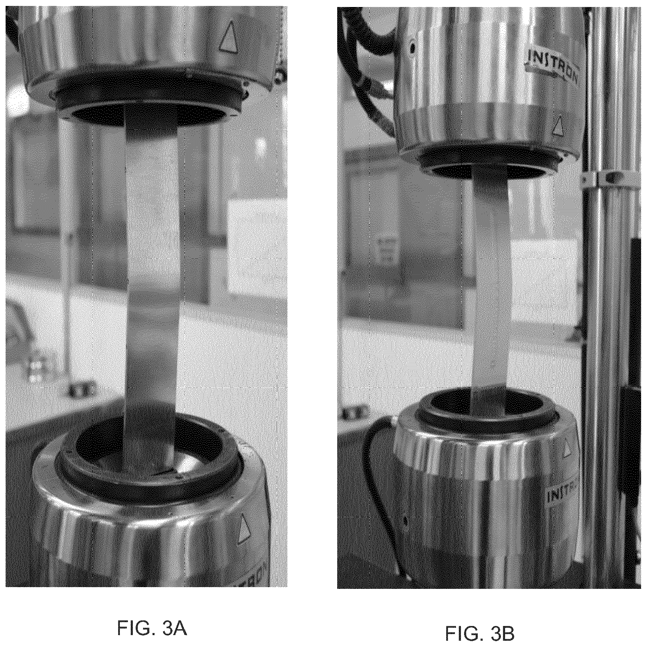

Buckling mode was also tested, as shown in Figs 3A and 3B. Fig 3A shows the buckling mode of an undamaged test element, while 3B shows a comparable element having the simulated SCC repaired by SPD as described above.

### EXAMPLE 2: Testing SPD repair on RAAF AP3C wing panels

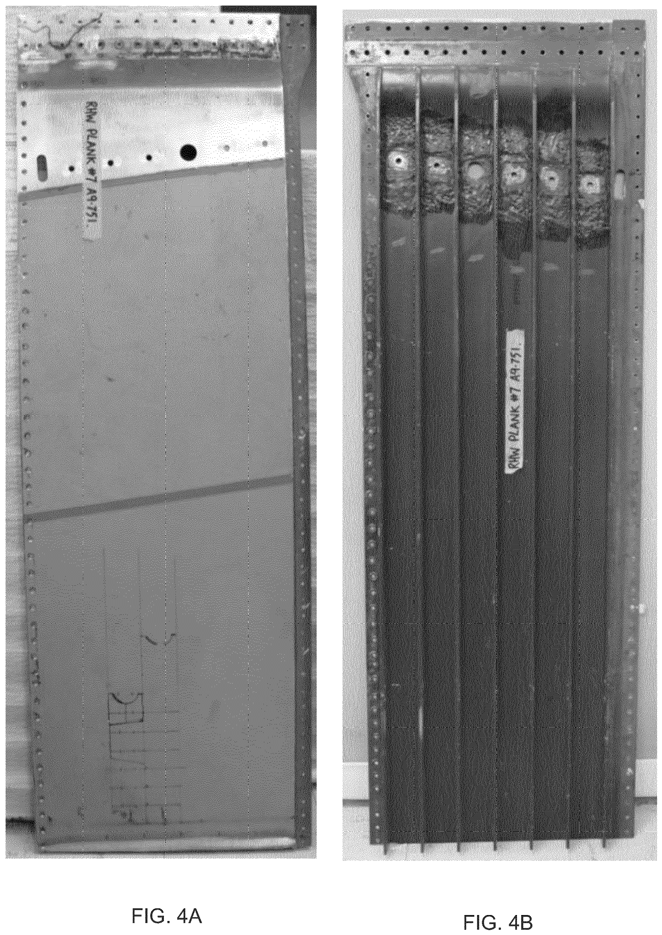

A total of five wing panel specimens were utilized in this study. This included two baseline specimens (i.e. no simulated SCC), one specimen with a simulated SCC and two specimens with simulated SCC repaired using SPD. All specimens were cut from a RAAF AP3C (Orion) wing panel supplied by Maritime Systems Patrol Office and Airbus Group Australia Pacific, Reference is made to Fig. 4.

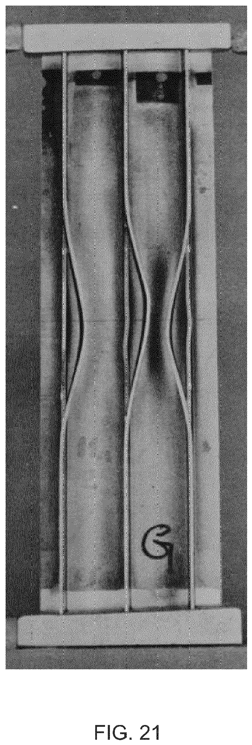

This configuration is known to result in the buckling modes of the wing stiffeners shown in Fig. 21.

A finite element study into the effect of SPD on the buckling modes and buckling loads was also performed. This study revealed that the computed and experimental buckling loads are in general agreement for all three types specimens.

### Specimens and Experimental Analysis

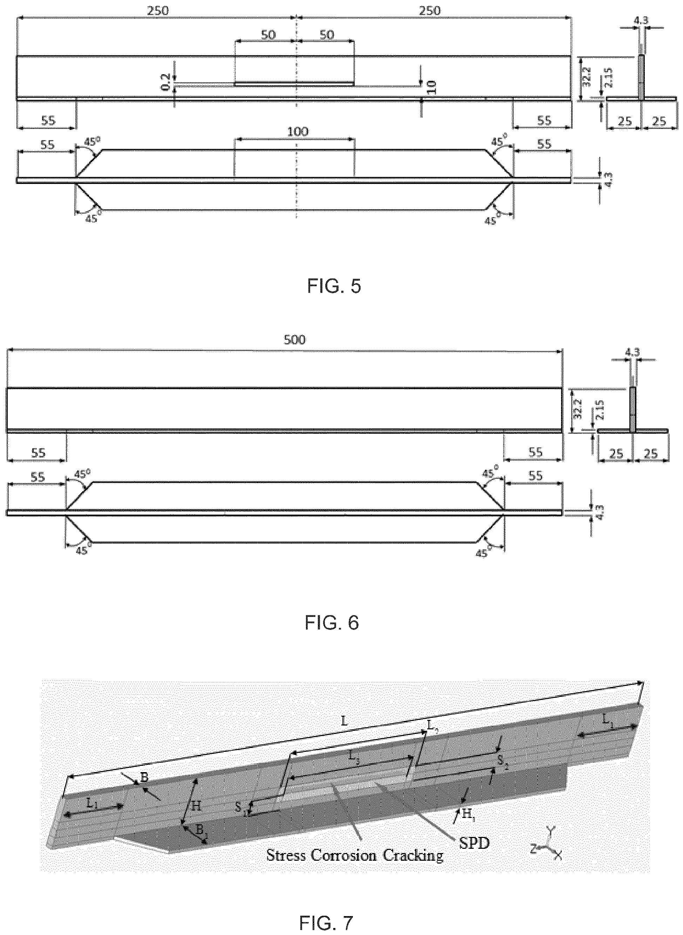

The dimensions for the specimen with simulated SCC and baseline specimen (no simulated crack) are given in Fig. 5 and Fig. 6 respectively. Dimensions for the SPD repair, which is to be applied on either side of the stiffener, to simulated stress corrosion cracking (SCC) are given in Fig. 7. In Fig. 7 the dimensions of the SPD repair are L₃ (Tip to tip length of the SCC in the specimen) = 100 mm, L₂ (Total length of the SPD) = 110 mm, i.e. the SPD extends 5mm past the end of each tip of the SCC. S₂ (Total width of the SPD) = 10 mm, i.e. the SPD should be ∼ 5 mm on either side of the simulated SCC (slot).

To investigate the effect of accidently applying a slightly thinner SPD coating to one side of the specimen two slightly different SPD repaired specimens were tested. In the first case, i.e. SPD specimen 1, the thickness of SPD applied on both sides of the stiffener (rib) was approximately 0.2 mm, i.e. there was approximately 0.2 mm 7075 material deposited on either side of the rib. In the second specimen, i.e. SPD specimen 2, one side had a thickness of approximately 0.2 mm and the other side had a thickness that varied between approximately 0.15 - 0.1 mm. Similarly it should also be noted that, since the specimens were cut from an actual wing panel, the thickness of the stiffeners also varied, see Table 1.

**Table 1 Difference in thicknesses of the stiffener**

| Specimen Type | No. | Thickness (mm) |
|---|---|---|
| With SCC | | 4.29 |
| Baseline specimen | 1 | 4.22 |
| | 2 | 4.20 |
| SPD repaired specimen | 1 | 4.38 |
| | 2 | 4.25 |

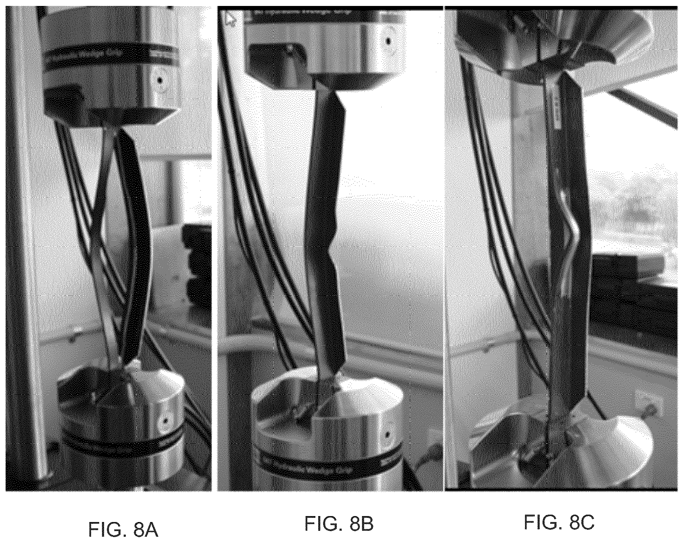

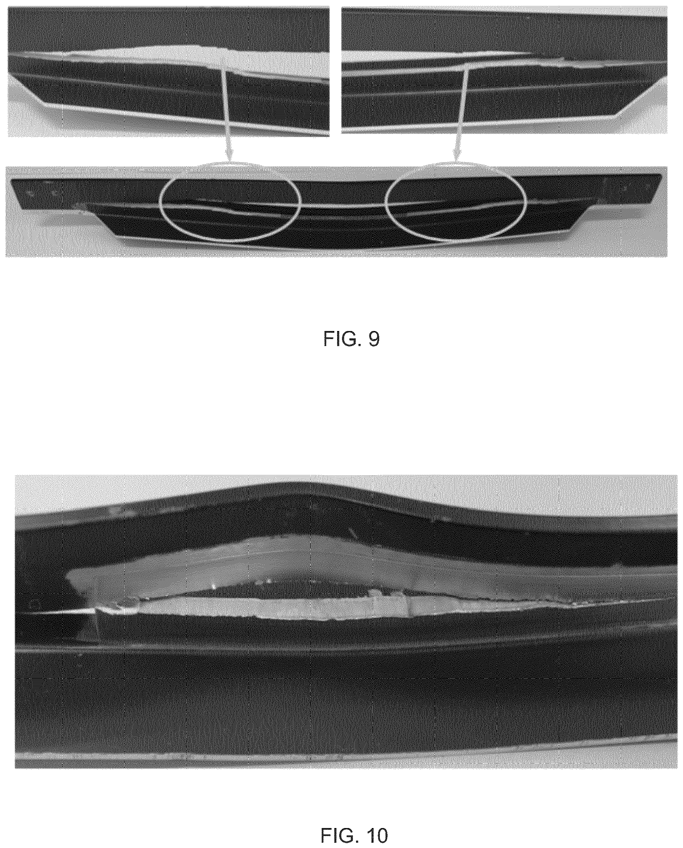

The buckled shapes for three types of specimens are shown in Fig. 8. When there was no SPD the SCC resulted in failure due to cracking which ran the entire length of the specimen, see Figs. 8 and 9. This did not occur for the case when the SCC was repaired using SPD. To complement the experimental test program a linear buckling analysis of specimens with and without SCC was also performed (see Appendix A of this

Example) where the complex mixed mode nature of the cracking associated with SCC is discussed.

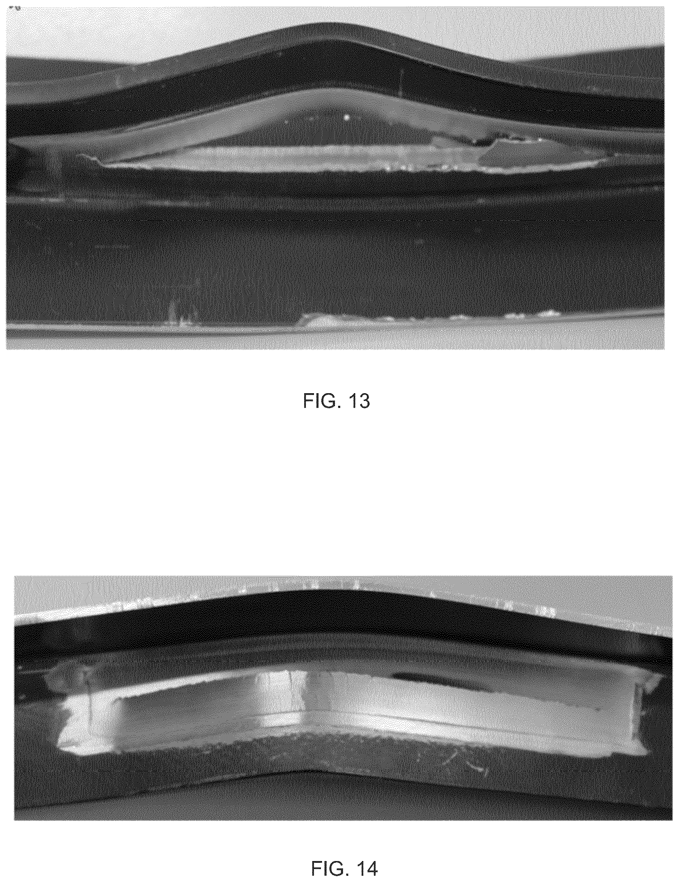

Failure configurations of the SPD repair (SPD specimens 1 and 2) to simulated SCC specimen are shown in Figs. 10 to 15. In both cases the SPD first cracked and buckling occurred following cracking of the SPD (see Appendix B of this Example). Buckling of the SPD repaired specimens subsequently led to limited spalling (debonding) of the SPD as can be seen in the concave side of deformed stiffer of buckled SPD.

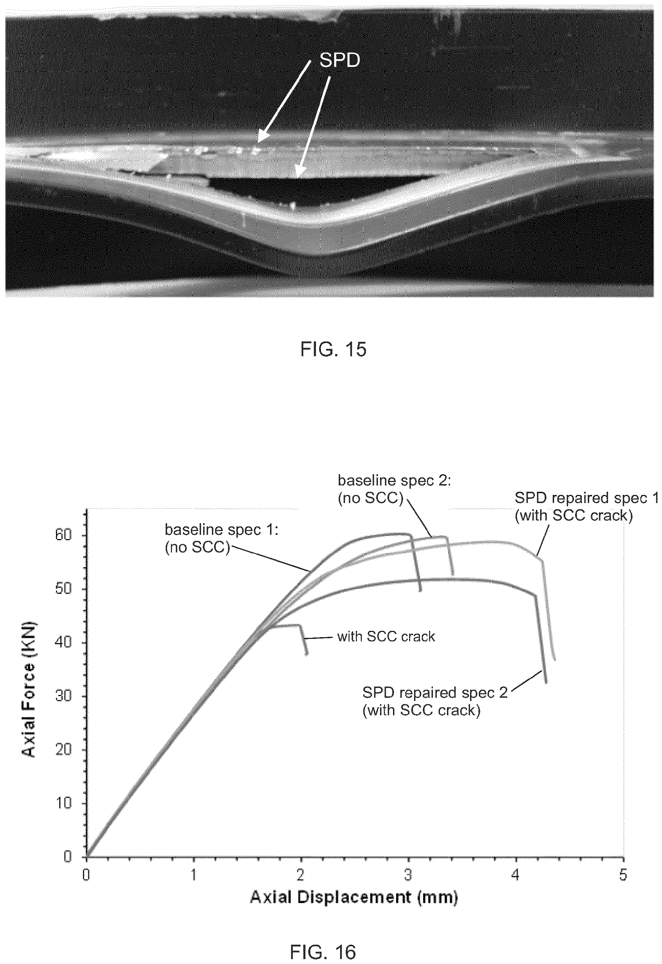

Fig. 16 presents the test results of axial force versus axial displacement. It will be noted that prior to failure the SPD has little effect on the load deflection curve and hence did not significantly change the load path. The test buckling loads for the various specimens and the comparison with FEM estimated buckling loads are given in the Table 2.

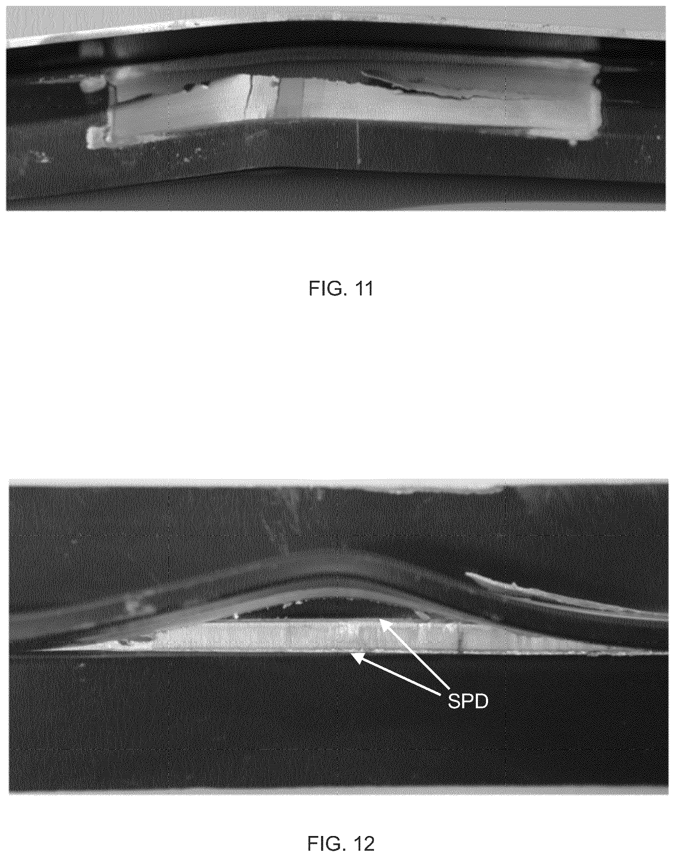

For the baseline specimen, i.e. no SCC and no SPD, there is a difference of ∼0.3% between the computed and measured buckling loads for the two baseline test specimens. For the specimen with SCC and no SPD there is a difference of ∼3.5% between the computed and measured in the buckling load. For the SPD repair cases, i.e. SPD specimens 1 and 2, the difference between computed and measured buckling loads for SPD specimen 1, which had (approximately) equal amounts, i.e. 0.2 mm thick, of SPD on either side is approximately 2.2%. For SPD specimen 2, that had a thin layer with a thickness that lay between 0.15 to 0.1 mm on one side (see Figs. 12 and 15), the difference between the computed and measured buckling loads was approximately 13.6%. This difference was due to premature failure of the SPD as a result of the reduced thickness on one side of the stiffener (rib), see Appendix B.

The difference in the buckling loads associated with SPD specimen 1 and the baseline specimens was approximately 4.5%. As such the SPD essentially restored the load carrying capacity of the structure. There was an approximately 13.2% difference in buckling loads between SPD specimen 2 and baseline specimen 1. This is due to premature failure of the SPD and highlights the need to design the SPD so as to avoid premature failure (see Appendix B of this Example).

In this case the load carrying capacity of SPD specimen 2 was lower than the computed and the experimental buckling loads for the baseline specimens. This is because, as shown in Appendix B, there is a high stress in the SPD directly over the SCC. This subsequently resulted in failure of the SPD and localised failure of the bond between the SPD and the (7075-T6) structure. Nevertheless, despite the failure of the SPD the crack tip stresses are reduced to such an extent that the crack did not run the length of the specimen, see Fig. 8 and Figs. 17 and 19. This suggests that the load carrying capacity of the SPD could be further increased, i.e. to a level above that of the baseline structure, by increasing the thickness of the SPD.

This experiments of this Example reveals that:
a) The thickness of the SPD should be designed so as to ensure that the SPD does not fail prematurely.
b) SPD has little effect on the load deflection curve and hence does not (significantly) change the load path.
c) Care must be taken to ensure that the thickness of the SPD is the same on both sides of the stiffener
d) The thickness of the SPD be designed/optimised so as to ensure that the load carrying capacity of the structure is (essentially) restored.

**Table 2 Comparison between the experimental and FEM buckling loads**

| Specimen Type | No. | Buckling Load | | |
|---|---|---|---|---|
| | | Experimental (kN) [Remote mean stress in MPa] | FEM (kN) | % difference |
| With SCC | | 41.3 [173] | 42.8 | 3.5 |
| Baseline specimen | 1 | 60.2 [252] | 60 | -0.03 |
| | 2 | 59.8 [250] | 60 | 0.3 |
| SPD repaired specimen | 1 | 58.8 [246] | 60.1 | 2.2 |
| | 2 | 51.9 [217] | 60.1 | 13.6 |

It should be noted that the buckling stress of 217 MPa achieved by SPD specimen 2 is significantly above the peak stress, typically 180 MPa, seen in the AP3C wing. As such Table 2 illustrates:
a) The potential of SCC to negatively impact structural integrity;
b) The potential for SPD to ensure against failure due to SCC.

### Summary of Experiments

This study has shown that:
- SCC can cause failure due to mixed mode cracking that run the length of the structure.
- Prior to buckling SCC has little (if any) effect on the load versus deflection curve and hence on the load path.
- SCC can dramatically reduce the buckling loads in rib stiffened wing planks.
- SCC can result in local buckling with Mode I, II and III contributions to the stress intensity factors at the tip of the SCC.
- SPD can be designed to essentially restore the load carrying capacity of the structure.
- The thickness of the SPD should be designed so as to ensure that the SPD does not fail prematurely.

Ensuring that there is equal thickness of SPD on either side of the SCC may be required.

### APPENDIX A: Static and linear buckling analysis of specimens with SCC

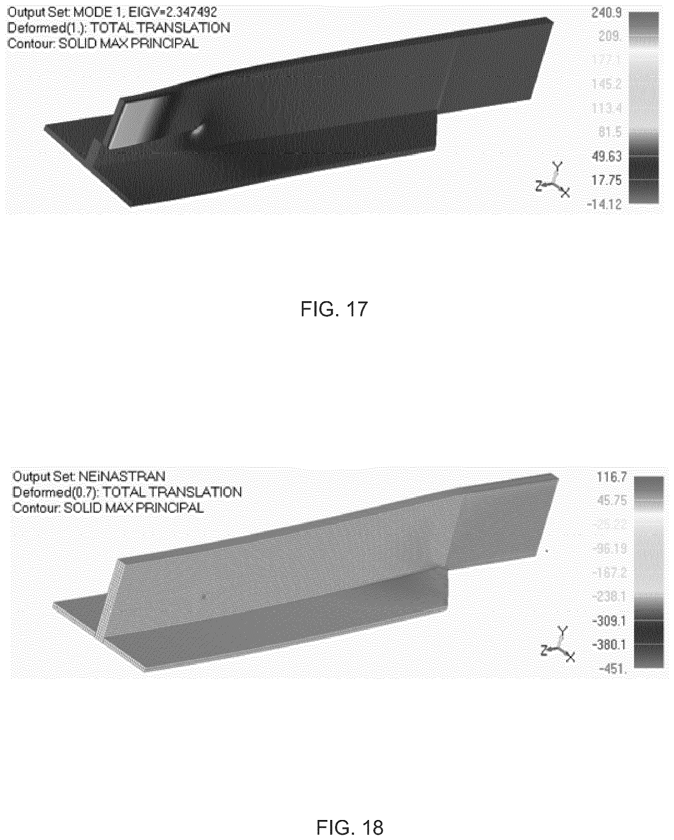

The results of a linear elastic finite element buckling analysis (Case 1) and a linear elastic static finite element analysis (Case 2) of the test specimens with simulated stress corrosion cracking (SCC) are given in Figs. 17 and 18. The results of a linear elastic finite element buckling analysis for a specimen with SCC repaired using SPD are presented in Appendix B. The static analysis was performed so as to evaluate the effect of the SCC prior to buckling. A post buckling analysis of the SPD repair was not performed. In both cases the axial remote loading was taken to be 41.3 KN, which equals the buckling loading of the unrepaired SCC specimen, see Table 1.

The value of K_{eff}, defined as (K_{I}² + K_{II}² + K_{III}²)^{1/2}, associated with Case 1 (the linear buckling analysis) was approximately 3.43 times that of Case 2 (the linear static analysis). Here K_{I} is the Mode I value of the stress intensity factor and K_{III} is the Mode III value of the stress intensity factor. The value of K_{III} for Case 1 was 8.36 times that of Case 2 and K_{III} was the dominant component of the effective stress intensity factor K_{eff}. For Case 1, the buckling analysis, the ratio between K_{III} was approximately 73% of K_{eff}. This study reveals the complex mixed mode nature of cracking associated with SCC and the detrimental effect of buckling on the stress intensity factors associated with the SCC.

### APPENDIX B: Buckling analysis of SCC specimen with an SPD repair

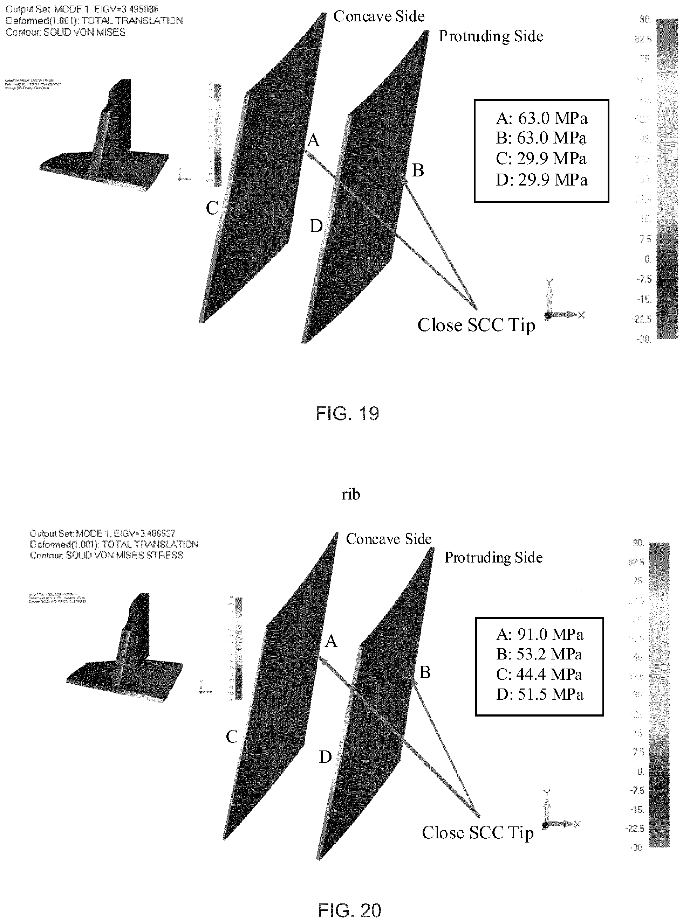

To illustrate the effect of differing thickness and a reduced thickness on one side we examined two cases. The first case had the thicknesses of the SPD as 0.2 mm on both sides of the stiffener, i.e. Case 1, as per the baseline SPD repair that was tested. In the second example, i.e. Case 2, we considered the case when the SPD was 0.2 mm thick on one side and 0.1 mm thick on the other. The resultant computed von Mises equivalent stresses associated with the SPD on either side of the stiffener are shown in Figs. 19 and 20.

### EXAMPLE 3: Computer modelling of SPD repair on single stiffener.

In arriving at a relevant model, it was necessary to investigate firstly how the test elements were to be loaded. The elements may be loaded through the skin only, or through the stiffener only.

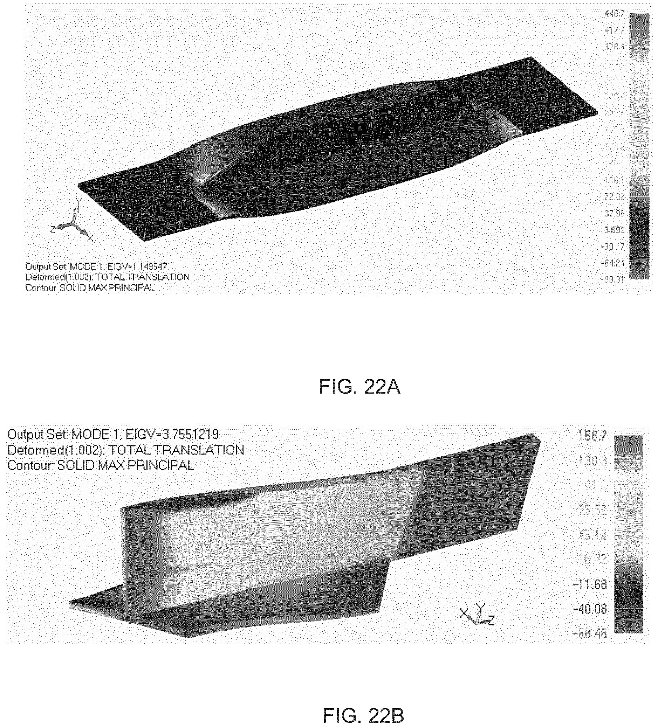

Results from loading through the skin only are shown in Fig. 22A. Clearly, the buckling mode was not realistic. Moreover, a real specimen would likely fail at the ends of the stiffener prior to buckling.

Results from loading through the stiffener only are shown in Fig. 22B, which shows a realistic buckling mode.

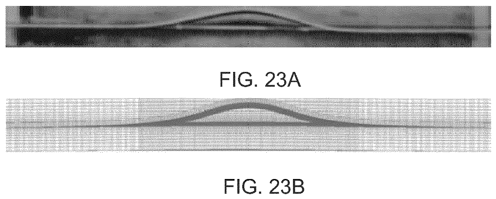

Subsequently, the effect of a 100 mm crack in a real specimen with loading through the stiffener only. The specimen was modelled with loading through the stiffener only. The buckling mode of the real specimen is shown in Fig. 23A, and the computed model shown in Fig. 23B. It will be noted that the buckling modes are virtually identical, thereby validating the model. Furthermore, both real specimen and the modelled specimen showed a 35% reduction in buckling load caused by the 100 mm crack.

Further modelling was performed based in the three stiffener configuration, and loaded through the stiffeners only.

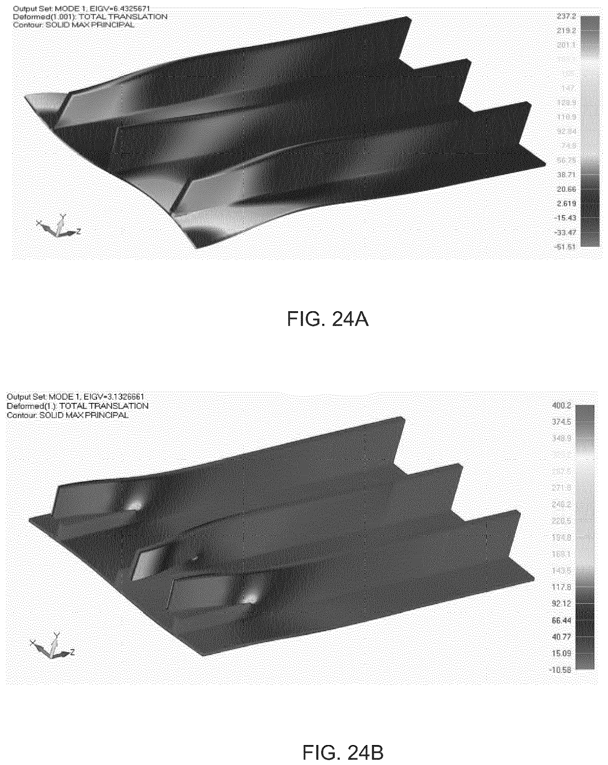

Fig. 24A shows modelling of three stiffeners with no crack and no SPD patch (baseline specimen). The model exhibited realistic buckling mode. Fig. 24B shows modelling of the three stiffeners with a 100 mm long SCC in each stiffener. The model showed the expected (different to baseline) buckling mode, and also a reduction of buckling mode by 50%.

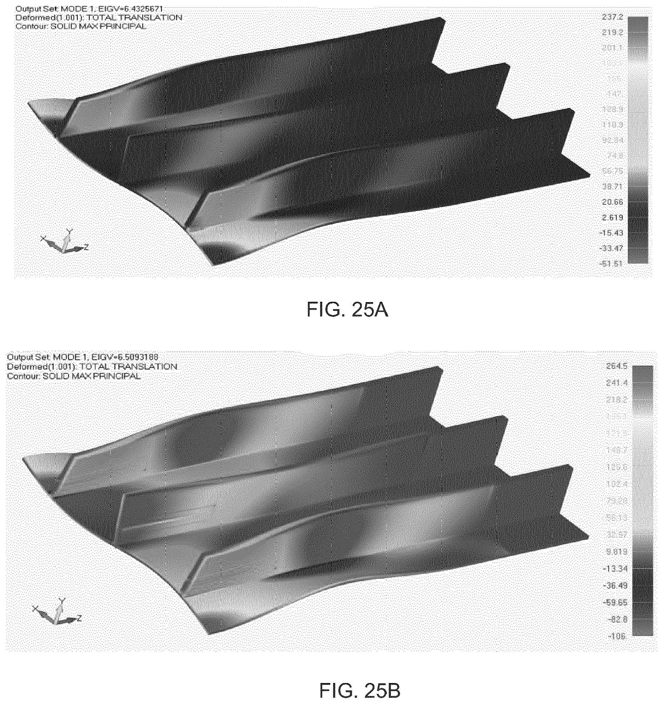

The effect of a SPD patch over a SCC was next modelled, the results shown in Fig. 25A and 25B. Fig. 25A shows modelling of three stiffeners with no crack and no SPD patch (baseline specimen). Fig. 25B shows three stiffeners, each with a 100 mm long SCC with a 0.2 mm deep SPD patch and using a planform of 10 x 110 mm. The buckling modes and buckling loads between the baseline and test elements were identical. This result demonstrates the ability to restore the buckling mode and buckling load of an aircraft frame element to that of the original (undamaged) element.

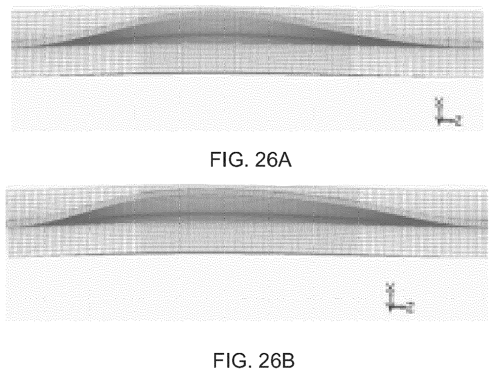

Further modelling was performed to compare buckling modes for specimens with (a) no SCC and no SPD (Fig. 26A) and (b) SCC with a SPD patch (Fig. 26B).

The validated modelling detailed herein demonstrates that SPD is able to restore buckling mode, and also buckling load.

## Claims

1. A method for (i) repairing a structural weakness, or (ii) preventing or inhibiting the initiation of a structural weakness, or (iii) preventing or inhibiting the progression of a structural weakness in an aircraft frame element, the method comprising the step of bonding a plurality of particles to the element by treating both sides of the element, the bonding being effected under conditions allowing the plurality of metallic particles to form a substantially continuous layer both over and under the area of weakness, or the predicted area of weakness.

2. The method of claim 1, wherein at least a proportion, or substantially all, of the particles are metallic particles.

3. The method of claim 1 or claim 2, wherein the bonding does not involve melting or fusing of the particles; preferably wherein the bonding is achieved by a cold spray process.

4. The method of claim 3, wherein the cold spray process is supersonic particle deposition; preferably wherein the step of bonding the plurality of particles to the element is performed under conditions such that a design parameter of the element is not materially altered negatively.

5. The method of any one of claims 1 to 4, wherein the depth of the substantially continuous layer is controlled during the step of bonding such that a design parameter of the element is not materially altered negatively; preferably wherein the design parameter is buckling resistance.

6. The method of any one of claims 1 to 5, wherein the depth of the substantially continuous layer is at least about 0.05 mm, or less than about 4 mm.

7. The method of any one of claims 1 to 6, wherein the structural weakness is a crack; preferably wherein the crack is a stress corrosion crack.

8. The method of any one of claims 1 to 7, wherein the frame element is a longeron, a former, a stringer, a bulkhead, a rib, or a spar.

9. An aircraft frame element comprising a substantially continuous metallic layer, the layer being deposited on a surface of the structure, the layer being capable of (i) repairing a structural weakness, or (ii) preventing or inhibiting the initiation of a structural weakness, or (iii) preventing or inhibiting the progression of a structural weakness in the aircraft structure, wherein the layer comprises a plurality of metallic particles;
**characterized in that** both sides of the element are treated and the plurality of metallic particles form a substantially continuous layer both over and under the area of weakness, or the predicted area of weakness.

10. The frame element of claim 9 wherein, at least a proportion, or substantially all, of the particles are metallic particles.

11. The frame element of claim 9 or claim 10, wherein the substantially continuous layer is deposited on the surface of the aircraft structure by a method according to any one of claims 1 to 8.

12. The frame element of any one of claims 9 to 11, wherein the substantially continuous layer has a depth of at least about 0.05 mm, or less than about 4 mm.

13. The frame element of any one of claims 9 to 12, wherein the structural weakness is a crack; preferably wherein the crack is a stress corrosion crack; preferably wherein the frame element is a longeron, a former, a stringer, a bulkhead, a rib, or a spar.

## Patentansprüche

1. Verfahren zum (i) Reparieren einer strukturellen Schwäche oder (ii) Verhindern oder Hemmen der Einleitung einer strukturellen Schwäche oder (iii) Verhindern oder Hemmen der Progression einer strukturellen Schwäche in einem Flugzeugrahmenelement, wobei das Verfahren den Schritt des Bondens einer Vielzahl von Partikeln an das Element durch Behandeln beider Seiten des Elements umfasst, wobei das Bonden unter Bedingungen erfolgt, die ermöglichen, dass die Vielzahl von metallischen Partikeln eine im Wesentlichen durchgehende Schicht sowohl über als auch unter dem Schwächebereich oder dem vorhergesagten Schwächebereich bildet.

2. Verfahren nach Anspruch 1, worin mindestens ein Teil, oder im Wesentlichen alle, der Partikel metallische Partikel ist/sind.

3. Verfahren nach Anspruch 1 oder Anspruch 2, worin das Bonden nicht das Schmelzen oder Fusionieren der Partikel beinhaltet; vorzugsweise, worin das Bonden durch ein Kaltspritzverfahren erfolgt.

4. Verfahren nach Anspruch 3, worin das Kaltspritzverfahren in Überschall-Partikelabscheidung besteht; vorzugsweise, worin der Schritt des Bondens der Vielzahl von Partikeln an das Element unter solchen Bedingungen durchgeführt wird, dass ein Konstruktionsparameter des Elements nicht wesentlich negativ geändert wird.

5. Verfahren nach einem der Ansprüche 1 bis 4, worin die Tiefe der im Wesentlichen durchgehenden Schicht während des Schritts des Bondens so kontrolliert wird, dass ein Konstruktionsparameter des Elements nicht wesentlich negativ geändert wird; vorzugsweise, worin der Konstruktionsparameter Knickwiderstand ist.

6. Verfahren nach einem der Ansprüche 1 bis 5, worin die Tiefe der im Wesentlichen durchgehenden Schicht mindestens etwa 0,05 mm, oder weniger als etwa 4 mm, beträgt.

7. Verfahren nach einem der Ansprüche 1 bis 6, worin die strukturelle Schwäche ein Riss ist; vorzugsweise, worin der Riss ein Spannungskorrosionsriss ist.

8. Verfahren nach einem der Ansprüche 1 bis 7, worin das Rahmenelement ein Längsträger, ein Formspant, ein Stringer, eine Schottwand, eine Rippe oder ein Holm ist.

9. Flugzeugrahmenelement, umfassend eine im Wesentlichen durchgehende metallische Schicht, wobei die Schicht auf einer Oberfläche der Struktur abgeschieden ist, wobei die Schicht fähig ist zum (i) Reparieren einer strukturellen Schwäche oder (ii) Verhindern oder Hemmen der Einleitung einer strukturellen Schwäche oder (iii) Verhindern oder Hemmen der Progression einer strukturellen Schwäche in der Flugzeugstruktur, worin die Schicht eine Vielzahl von metallischen Partikeln umfasst;
**dadurch gekennzeichnet, dass**
beide Seiten des Elements behandelt sind und die Vielzahl von metallischen Partikeln eine im Wesentlichen durchgehende Schicht sowohl über als auch unter dem Schwächebereich oder dem vorhergesagten Schwächebereich bildet.

10. Rahmenelement nach Anspruch 9, worin mindestens ein Teil, oder im Wesentlichen alle, der Partikel metallische Partikel ist/sind.

11. Rahmenelement nach Anspruch 9 oder Anspruch 10, worin die im Wesentlichen durchgehende Schicht auf der Oberfläche der Flugzeugstruktur durch ein Verfahren nach einem der Ansprüche 1 bis 8 abgeschieden ist.

12. Rahmenelement nach einem der Ansprüche 9 bis 11, worin die im Wesentlichen durchgehende Schicht eine Tiefe von mindestens etwa 0,05 mm, oder weniger als etwa 4 mm, aufweist.

13. Rahmenelement nach einem der Ansprüche 9 bis 12, worin die strukturelle Schwäche ein Riss ist; vorzugsweise, worin der Riss ein Spannungskorrosionsriss ist; vorzugsweise, worin das Rahmenelement ein Längsträger, ein Formspant, ein Stringer, eine Schottwand, eine Rippe oder ein Holm ist.

## Revendications

1. Un procédé destiné à (i) réparer une faiblesse structurale ou (ii) prévenir ou inhiber le début d'une faiblesse structurale ou (iii) prévenir ou inhiber la progression d'une faiblesse structurale dans un élément de cadre d'avion, le procédé comprenant l'étape consistant à lier une pluralité de particules métalliques à l'élément en traitant les deux côtés de l'élément, la liaison étant effectuée dans des conditions permettant à la pluralité de particules métalliques de former une couche sensiblement continue à la fois sur et sous la zone de faiblesse ou la zone de faiblesse prédite.

2. Le procédé selon la revendication 1, dans lequel au moins une proportion, ou sensiblement la totalité, des particules sont des particules métalliques.

3. Le procédé selon la revendication 1 ou la revendication 2 dans lequel la liaison n'implique pas la fusion ou le fusionnement des particules ; de préférence dans lequel la liaison est réalisée par un processus de pulvérisation à froid.

4. Le procédé selon la revendication 3, dans lequel le processus de pulvérisation à froid est un dépôt de particules supersonique ; de préférence dans lequel l'étape de liaison de la pluralité de particules métalliques à l'élément est effectuée dans des conditions telles qu'un paramètre de conception de l'élément n'est pas substantiellement modifié négativement.

5. Le procédé selon l'une quelconque des revendications 1 à 4, dans lequel la profondeur de la couche sensiblement continue est contrôlé durant l'étape de liaison de telle sorte qu'un paramètre de conception de l'élément n'est pas substantiellement modifié négativement ; de préférence dans lequel le paramètre de conception est la résistance au flambage.

6. Le procédé selon l'une quelconque des revendications 1 à 5, dans lequel la profondeur de la couche sensiblement continue fait au moins environ 0,05 mm ou moins environ 4 mm.

7. Le procédé selon l'une quelconque des revendications 1 à 6, dans lequel la faiblesse structurale est une fissure ; de préférence dans lequel la fissure est une fissure de corrosion sous contrainte.

8. Le procédé selon l'une quelconque des revendications 1 à 7, dans lequel l'élément de cadre est un longeron, un couple, une lisse, une cloison, une nervure ou un longeron secondaire.

9. Un élément de cadre d'avion comprenant une couche métallique sensiblement continue, la couche étant déposée sur une surface de la structure, la couche étant capable de (i) réparer une faiblesse structurale ou (ii) prévenir ou inhiber le début d'une faiblesse structurale ou (iii) prévenir ou inhiber la progression d'une faiblesse structurale dans la structure de l'avion, dans lequel la couche comprend une pluralité de particules métalliques ;
**caractérisé en ce que** les deux côtés de l'élément sont traités et la pluralité de particules métalliques forment une couche sensiblement continue à la fois sur et sous la zone de faiblesse ou la zone de faiblesse prédite.

10. L'élément de cadre selon la revendication 9 dans lequel au moins une proportion, ou sensiblement la totalité, des particules sont des particules métalliques.

11. L'élément de cadre selon la revendication 9 ou la revendication 10, dans lequel la couche sensiblement continue est déposée sur la surface de la structure de l'avion par un procédé selon l'une quelconque des revendications 1 à 8.

12. L'élément de cadre selon l'une quelconque des revendications 9 to 11, dans lequel la couche sensiblement continue a une profondeur d'au moins environ 0,05 mm ou de moins d'environ 4 mm.

13. L'élément de cadre selon l'une quelconque des revendications 9 à 12, dans lequel la faiblesse structurale est une fissure ; de préférence dans lequel la fissure est une fissure de corrosion sous contrainte ; de préférence dans lequel l'élément de cadre est un longeron, un couple, une lisse, une cloison, une nervure ou un longeron secondaire.
